# EUROPEAN PATENT APPLICATION

(11) **EP 4 852 127 A1**
(43) Date of publication of application: **09.12.2026**
(21) Application number: 24936364.9
(22) Date of filing: 25.04.2024
(51) Int. Cl.: H01M 10/0583, H01M 10/04, H01M 10/0585

(54) **BATTERY CELL, BATTERY AND ELECTRICAL APPARATUS**

(71) Applicant: Contemporary Amperex Technology Co., Limited, Ningde, Fujian 352100 (CN)
(72) Inventor: CHEN, Jinhua, Ningde, Fujian 352100 (CN)
(74) Representative: Ran, Handong
(86) International application number: PCT/CN2024/089894
(87) International publication number: WO 2025/222456

(57) **Abstract**

A battery cell (100), a battery (1000), and an electrical apparatus (2000). The battery cell (100) comprises: an electrode assembly (20), the electrode assembly (20) comprising, arranged in a stacked configuration, a plurality of electrode sheets and a separator. In the stacking direction, the plurality of electrode sheets at least comprise a first electrode sheet (21) and a second electrode sheet (22) which are located at two opposite ends in the stacking direction, the second electrode sheet (22) comprising a main body part (221) and tabs (222). The side of the second electrode sheet (22) facing away from the first electrode sheet (21) is provided with a protection member (25), the protection member (25) covering at least a portion of the main body part (221) of the second electrode sheet (22) and extending to at least one edge of the main body part (221).

## Description

### TECHNICAL FIELD

The present application relates to the technical field of batteries, and in particular, to a battery cell, a battery, and an electric apparatus.

### BACKGROUND

Stacked battery cells feature a high energy density and a relatively stable internal structure.

During actual production, the pressing claw of the stacking machine finally moves outwards in a direction parallel to the electrode plate. In this case, the pressing claw scrapes the surface of the electrode plate, which causes scratches on the electrode plate, and even damage to the separator, leading to incidents such as fires and posing safety risks.

### SUMMARY

In view of the above problems, the present application provides a battery cell, a battery, and an electric apparatus, which can alleviate problems such as scratches on the electrode plate and damage to the separator during battery cell manufacturing.

In a first aspect, the present application provides a battery cell. The battery cell includes: an electrode assembly, where the electrode assembly includes a plurality of electrode plates and a separator arranged in a stacking manner, in the stacking direction, the plurality of electrode plates at least include a first electrode plate and a second electrode plate located at opposite ends in the stacking direction, and the second electrode plate includes a main body part and a tab; the side of the second electrode plate distal to the first electrode plate is provided with a protective member, and the protective member covers at least a part of the main body part and extends to at least one edge of the main body part.

In the technical solutions of the embodiments of the present application, by providing the protective member on the main body part of the second electrode plate of the electrode assembly, damage to the electrode plate and the like caused by the contact and scraping between the pressing claw and the second electrode plate are avoided, thereby avoiding the ablation of the separator, fires, and the like, and improving the yield rate of the electrode assembly. In addition, since the protective member covers the main body part and extends to the edge, the protective member can reinforce the second electrode plate, thereby improving the strength at the edge of the main body part of the second electrode plate, further avoiding the impact, damage, and the like at the edge of the electrode plate during subsequent assembly process, and improving the yield rate of the battery cell after assembly.

In some embodiments, the main body part of the second electrode plate is rectangular and is provided with four corner parts, and the side of each of the corner parts distal to the first electrode plate is provided with one protective member. In the above technical solution, the pressing claws are arranged in correspondence with the four corner parts of the second electrode plate, such that the pressing claws can be spaced apart from the second electrode plate, thereby avoiding damage to the electrode plate caused by the contact and scraping between the pressing claw and the second electrode plate, and avoiding the ablation of the separator, fires, and the like. In addition, the size of the protective member can be reduced, thereby facilitating the manufacturing and forming of the protective member.

In some embodiments, the main body part of the second electrode plate is rectangular, the main body part has a length dimension of L1, the protective member has a minimum dimension of L2 in the length direction of the second electrode plate, and 0.1L1 ≤ L2 ≤ 0.5L1. In the above technical solution, the protective member can not only effectively protect the second electrode plate, but also prevent the protective member from an excessive size that may affect the arrangement of the protective member on the second electrode plate.

In some embodiments, the main body part of the second electrode plate is rectangular, the main body part has a width dimension of B1, the protective member has a minimum dimension of B2 in the width direction of the second electrode plate, and 0.1B1 ≤ B2 ≤ 0.5B1. In the above technical solution, the protective member can not only effectively protect the second electrode plate, but also prevent the protective member from an excessive size that may affect the arrangement of the protective member on the second electrode plate.

In some embodiments, the main body part of the second electrode plate has a thickness of H1, the protective member has a maximum thickness of H2, and 0.5H1 ≤ H2 ≤ 2H1. In the above technical solution, the protective member can effectively protect the second electrode plate without occupying excessive space, thereby avoiding, to a certain extent, the decrease in the energy density of the battery cell.

In some embodiments, the protective member includes at least one protective layer and a heat absorbing layer having heat absorbing capacity, the protective layer and the heat absorbing layer are arranged in the stacking direction of the electrode assembly, and the side of the heat absorbing layer distal to the second electrode plate is provided with one protective layer. In the above technical solution, when the pressing claw is retracted, even if the pressing claw scrapes the protective member and generates a certain amount of heat, the protective layer can transfer the heat to the heat absorbing layer, and the heat absorption by the heat absorbing layer reduces the temperature at this position, further avoiding the probability of ablation of the separator and improving the reliability and yield rate of the battery cell.

In some embodiments, two protective layers are present, and the heat absorbing layer is arranged between the two protective layers. In the above technical solution, the heat absorbing layer is protected by the two protective layers, which can improve the stability of the overall structure, prevent, to a certain extent, the phase change or deformation of the heat absorbing layer due to heat absorption from affecting the reliability of the protection of the protective member, and avoid other adverse effects caused by the direct contact between the heat absorbing layer and the second electrode plate.

In some embodiments, the heat absorbing layer is a paraffin layer. In the above technical solution, the use of the paraffin material, when the pressing claw scrapes the protective member, allows the heat absorbing layer to absorb the heat generated by scraping through a phase change, thereby reducing the probability of heat transfer to the second electrode plate, reducing the probability of ablation of the second electrode plate, and improving the reliability and yield rate of the electrode assembly.

In some embodiments, the protective layer is a polyolefin layer. In the above technical solution, the use of the polyolefin material allows the protective layer to effectively protect the heat absorbing layer. The polyolefin material has good chemical stability, insulating properties, and ease to process, manufacture, and form, which facilitates large-scale manufacturing and use of the protective member.

In some embodiments, the protective member is coupled with the second electrode plate by bonding. In the above technical solution, the fixed connection between the protective member and the second electrode plate is achieved. The simple assembly process facilitates the assembly and formation and reduces the manufacturing difficulty and the manufacturing cost.

In some embodiments, the side of the protective member proximal to the second electrode plate is provided with an adhesive layer. In the above technical solution, during manufacturing, the adhesive layer may be disposed on the protective member in advance. When the protective member is placed on the second electrode plate, the adhesive layer is in contact with the second electrode plate, such that the protective member can be adhered to the second electrode plate, thereby facilitating the connection.

In some embodiments, the protective member is made of a material including one of polypropylene, polyethylene, and polyethylene terephthalate. In the above technical solution, the use of the above materials provides the protective member with good chemical stability and insulating properties, ease to process, manufacture, and form, and cost-efficiency, which facilitates large-scale manufacturing and use of the protective member.

In some embodiments, the side of the protective member distal to the second electrode plate is provided with a smooth planar surface. In the above technical solution, the scraping with the protective member when the pressing claw is retracted can be reduced, which may reduce the probability of wear of the protective member, facilitate the retraction of the pressing claw, and reduce the obstruction to movement.

In some embodiments, the protective member has a Shore hardness of 30 A to 90 A. In the above technical solution, the protective member can not only effectively protect the second electrode plate, but also improve the yield rate of the battery cell after assembly.

In a second aspect, the present application provides a battery. The battery includes the battery cell according to the above embodiments.

In a third aspect, the present application provides an electric apparatus. The electric apparatus includes the battery according to the above embodiments, and the battery is configured to provide electric energy.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the present application. Furthermore, the same reference numerals in all the drawings denote identical components. In the drawings:
FIG. 1 is a schematic diagram of an electric apparatus in the related art;
FIG. 2 is a schematic diagram of a battery in the related art;
FIG. 3 is a schematic diagram of a battery cell according to some embodiments of the present application;
FIG. 4 is a schematic diagram of production and processing of a battery cell according to some embodiments of the present application;
FIG. 5 is a schematic diagram of an electrode assembly according to some embodiments of the present application;
FIG. 6 is a schematic diagram of an electrode assembly according to some other embodiments of the present application;
FIG. 7 is a schematic diagram of a second electrode plate according to some embodiments of the present application; and
FIG. 8 is a schematic diagram of a protective member according to some embodiments of the present application.

Reference numerals:
battery 1000; electric apparatus 2000;
battery cell 100; case 200; first part 210; second part 220;
housing 10; housing body 11; end cover 12;
electrode assembly 20; first electrode plate 21; second electrode plate 22; main body part 221; tab 222; intermediate electrode plate 23; separator 24; protective member 25; protective layer 251; heat absorbing layer 252; adhesive layer 253.
pressing claw 30.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, of the embodiments of the present application. Based on the embodiments in the present application, all other embodiments obtained by those of ordinary skill in the art without creative efforts shall fall within the scope of protection of the present application.

Unless otherwise defined, all technical and scientific terms used in the present application have the same meaning as usually understood by those skilled in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the above terms in the present application can be understood based on specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated apparatus, are only exemplary and should not be construed as limiting the present application in any way.

The term "plurality of" used in the present application refers to two or more (including two).

In the present application, a battery refers to a single physical module that includes one or more battery cells to provide higher voltage and capacity. For example, the battery mentioned in the present application may include a battery module group, a battery pack, or the like. Some batteries may include a case used for encapsulating one or a plurality of battery cells or a plurality of battery module groups. The case can prevent liquid or other foreign matter from affecting the charging or discharging of the battery cells. Certainly, some other batteries may not include the above case and are directly disposed in the battery mounting compartment of the electric apparatus.

In the present application, battery cells may include lithium-ion secondary batteries, lithium-ion primary batteries, lithium-sulfur batteries, sodium-lithium-ion batteries, sodium-ion batteries, magnesium-ion batteries, or the like. This is not limited in the embodiments of the present application. The battery cell may be cylindrical, flat, rectangular parallelepiped-shaped, or in other shapes. This is also not limited in the embodiments of the present application. According to the way of packaging, battery cells are generally divided into three types: cylindrical battery cells, prismatic battery cells, and pouch battery cells. This is also not limited in the embodiments of the present application.

For example, the battery cell may include a housing, an electrode assembly, and an electrolyte solution, and the housing is configured to accommodate the electrode assembly and the electrolyte solution. The electrode assembly consists of a positive electrode plate, a negative electrode plate, and a separator. The battery cell primarily works by the movement of metal ions between the positive electrode plate and the negative electrode plate. The positive electrode plate includes a positive electrode main body part and a positive electrode tab. The positive electrode tab is led out from one end of the positive electrode main body part, most areas of the positive electrode tab are not coated with the positive electrode active material, and most areas of the positive electrode main body part are coated with the positive electrode active material. The negative electrode plate includes a negative electrode main body part and a negative electrode tab. The negative electrode tab is led out from one end of the negative electrode main body part, most areas of the negative electrode tab are not coated with the negative electrode active material, and most areas of the negative electrode main body part are coated with the negative electrode active material.

To ensure the passing of a large current without fusing, a plurality of positive electrode tabs are provided and stacked together, and a plurality of negative electrode tabs are provided and stacked together.

The material of the separator may be polypropylene (PP), polyethylene (PE), or the like.

The battery cell may be provided with a post terminal or the like connected to the tab as an electrical connection part of the battery cell. In addition, the battery cell may be provided with a pressure relief part. When the internal pressure of the battery cell is excessive (for example, thermal runaway occurs), the pressure relief part is configured to release internal substances (such as gas, liquid, or particulate matter) of the battery cell, so as to reduce the internal pressure of the battery cell and avoid dangerous accidents such as explosion and combustion of the battery cell caused by rapid pressurization inside the battery cell. For example, the pressure relief part may be an anti-explosion valve, an anti-explosion sheet, or the like.

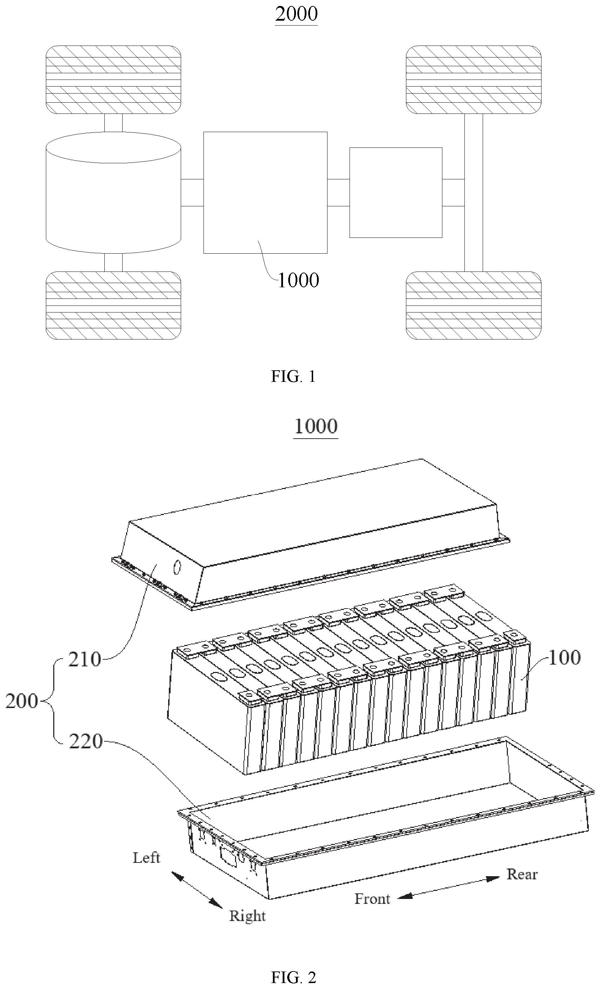

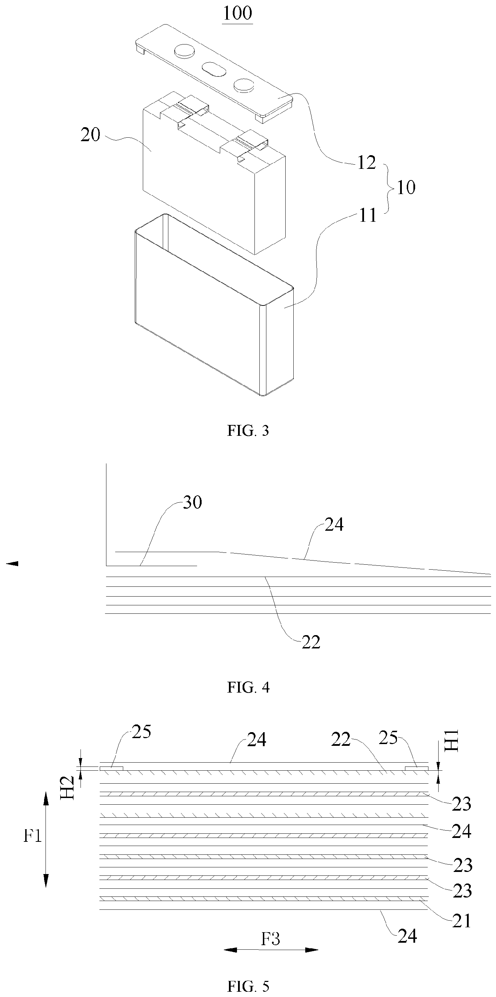

For example, as shown in FIGs. 1 and 2, in some electric apparatuses 2000, a battery 1000 is used for power supply. The battery 1000 includes a case 200 and battery cells 100, and the case 200 includes a first part 210 and a second part 220. As shown in FIG. 3, the battery cell 100 includes a housing 10 and an electrode assembly 20. The electrode assembly 20 includes electrode plates and a separator 24. Some electrode assemblies 20 are arranged in a stacking manner, and the electrode plates and the separator 24 are arranged in a stacking manner. As shown in FIG. 4, during a conventional production process, after the last electrode plate is disposed, the pressing claw 30 of a stacking machine compresses the electrode plate downwards with a predetermined pressure, then the separator 24 is disposed to cover the last electrode plate, and finally, the pressing claw 30 is removed. The pressing claw 30 cannot be lifted upwards, or otherwise the outermost separator 24 is lifted and cannot achieve a protective effect. Therefore, the pressing claw 30 can only be retracted outward in a direction parallel to the electrode plate and the separator 24. In this case, the pressing claw 30 scrapes the surface of the electrode plate and generates heat, causing scratches on the electrode plate, damage to the separator 24, and the like. Moreover, for some battery cells 100, a lithium supplement process is performed on the outermost negative electrode plate. When the pressing claw 30 is retracted outward, the pressing claw scrapes the lithium layer on the surface of the outermost negative electrode plate, which may cause ablation of the separator 24 or even fires, posing safety risks.

Therefore, the present application provides a battery cell 100. As shown in FIGs. 3 and 5, the battery cell 100 includes an electrode assembly 20. The electrode assembly 20 includes a plurality of electrode plates and a separator 24 arranged in a stacking manner. In the stacking direction, the plurality of electrode plates at least include a first electrode plate 21 and a second electrode plate 22 located at opposite ends in the stacking direction F1, and the second electrode plate 22 includes a main body part 221 and a tab 222. The side of the second electrode plate 22 distal to the first electrode plate 21 is provided with a protective member 25, and the protective member 25 covers at least a part of the main body part 221 of the second electrode plate 22 and extends to at least one edge of the main body part 221.

In the battery cell 100 of the above structure, by providing the protective member 25 on the main body part 221 of the second electrode plate 22 of the electrode assembly 20, damage to the electrode plate and the like caused by the contact and scraping between the pressing claw 30 and the second electrode plate 22 are avoided, thereby avoiding the ablation of the separator 24, fires, and the like, and improving the yield rate of the electrode assembly 20. In addition, since the protective member 25 covers the main body part 221 of the second electrode plate 22 and extends to the edge, the protective member 25 can reinforce the main body part 221 of the second electrode plate 22, thereby improving the strength at the edge of the main body part 221 of the second electrode plate 22, further avoiding the impact, damage, and the like at the edge of the electrode plate during subsequent assembly process, and improving the yield rate of the battery cell 100 after assembly.

As shown in FIG. 1, the battery 1000 having the battery cell 100 disclosed in the embodiments of the present application may be used in, but is not limited to use in, an electric apparatus 2000 such as a vehicle, a ship, or an aircraft, and the battery 1000 disclosed in the present application may constitute the power system of the electric apparatus 2000, so as to ensure the use safety and reliability of the electric apparatus 2000.

For example, the electric apparatus 2000 disclosed in the embodiments of the present application may be, but is not limited to, a vehicle, a mobile phone, a tablet computer, a laptop computer, a ship, a spacecraft, an electric toy, an electric tool, or the like. The vehicle may be a fuel vehicle, a gas vehicle, a new energy vehicle, or a railway vehicle, and the new energy vehicle may be a pure electric vehicle, a hybrid vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer.

The battery cell 100 according to the embodiments of the present application is described below with reference to the drawings.

As shown in FIGs. 3 to 8, the battery cell 100 according to the embodiments of the present application includes an electrode assembly 20. The electrode assembly 20 includes a plurality of electrode plates and a separator 24 arranged in a stacking manner. In the stacking direction F1, the plurality of electrode plates at least include a first electrode plate 21 and a second electrode plate 22 located at opposite ends in the stacking direction, and the second electrode plate 22 includes a main body part 221 and a tab 222. The side of the second electrode plate 22 distal to the first electrode plate 21 is provided with a protective member 25, and the protective member 25 covers at least a part of the main body part 221 of the second electrode plate 22 and extends to at least one edge of the main body part 221 of the second electrode plate 22.

The battery cell 100 includes a housing 10 and an electrode assembly 20. The housing 10 is configured to accommodate components such as the electrode assembly 20 and an electrolyte. The housing 10 may be a steel housing, an aluminum housing, a plastic housing (such as polypropylene), a composite metal housing (such as a copper-aluminum composite housing 10), an aluminum-plastic film, or the like. As an example, the housing 10 may include a housing body 11 and an end cover 12.

The battery cell 100 further includes an electrolyte that serves to conduct ions between the positive electrode and the negative electrode. The present application does not specifically limit the type of the electrolyte, which may be selected based on requirements. The electrolyte may be liquid-state, gel-state, or solid-state.

The electrode assembly 20 has and includes a positive electrode, a negative electrode, and a separator 24. During the charging and discharging process of the battery cell 100, active ions (such as lithium ions) are intercalated and deintercalated back and forth between the positive electrode and the negative electrode. The separator 24 is disposed between the positive electrode and the negative electrode to prevent the positive electrode and the negative electrode from short-circuiting while allowing the passage of active ions. The positive electrode may be a positive electrode plate, and the negative electrode may be a negative electrode plate. A plurality of positive electrode plates and a plurality of negative electrode plates may be separately disposed. The plurality of positive electrode plates and the plurality of negative electrode plates are alternately stacked to form the stack electrode assembly 20.

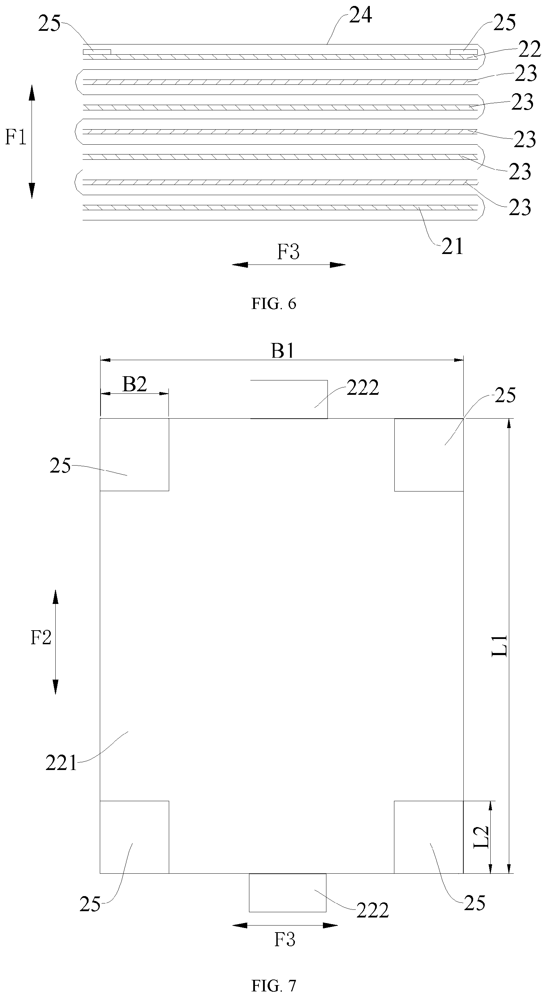

As shown in FIG. 5, a plurality of separators may be provided, and one separator is disposed between two adjacent electrode plates. As shown in FIG. 6, one separator may be provided, and the plurality of separators are bent such that a part of the separator is disposed between two adjacent electrode plates.

In some examples, the electrode assembly 20 is of a stacked structure, and the electrode assembly 20 includes two electrode plates, i.e., a first electrode plate 21 and a second electrode plate 22. The second electrode plate 22 includes a main body part 221 and a tab 222. The tab 222 extends out from one end of the main body part 221, most areas of the tab 222 are not coated with a positive electrode active material, and most areas of the main body part 221 are coated with the active material.

The first electrode plate 21 and the second electrode plate 22 are arranged in the stacking direction, and the outer side of the second electrode plate 22 is further provided with a protective member 25.

In some examples, as shown in FIGs. 3 to 6, the electrode assembly 20 is of a stacked structure. The electrode assembly 20 includes a plurality of electrode plates. In the stacking direction F1, the plurality of electrode plates sequentially include a first electrode plate 21, a plurality of intermediate electrode plates 23, and a second electrode plate 22. The first electrode plate 21 and the second electrode plate 22 are two electrode plates located at opposite ends in the stacking direction F1. The outer side of the second electrode plate 22 may be further provided with a protective member 25. The second electrode plate 22 here may be a negative electrode plate.

It should be noted that the plurality of electrode plates are arranged in the stacking direction F1 here. That is, during assembly, the first electrode plate 21 is arranged at the lowermost layer, then the plurality of intermediate electrode plates 23 are arranged, and finally the second electrode plate 22 is arranged at the uppermost layer. Therefore, the protective member 25 is disposed on the outer side of the second electrode plate 22.

The protective member 25 covers at least a part of the main body part 221 of the second electrode plate 22 and extends to at least one edge of the main body part 221 of the second electrode plate 22. Here, the protective member 25 extending to the edge of the main body part 221 means that the outer edge of the protective member 25 may be aligned with the edge of the main body part 221 of the second electrode plate 22.

Specifically, the protective member 25 may cover the entire main body part 221 of the second electrode plate 22. During the assembly of the electrode assembly 20 in this design, after the second electrode plate 22 covers the last layer of the plurality of electrode plates, a pressing claw 30 may press against the protective member 25 to compress the plurality of electrode plates. After the separator 24 covers the second electrode plate 22, since the protective member 25 covers the entire main body part 221 of the second electrode plate 22, the pressing claw 30 may be retracted in any direction without scraping the main body part 221 of the second electrode plate 22, thereby avoiding damage to the electrode plate and the like caused by the contact and scraping between the pressing claw 30 and the second electrode plate 22.

The protective member 25 may also cover a part of the main body part 221 of the second electrode plate 22, and may extend to one edge of the main body part 221 of the second electrode plate 22 in one direction. For example, a first edge and a second edge of the main body part 221 are opposite to each other in a first direction F1. In the first direction F1, the protective member 25 extends to the first edge of the main body part 221 of the second electrode plate 22 and is spaced apart from the second edge. During the assembly of the electrode assembly 20 in this design, after the second electrode plate 22 covers the last layer of the plurality of electrode plates, a pressing claw 30 presses against the protective member 25 to compress the plurality of electrode plates. After the separator 24 covers the second electrode plate 22, the pressing claw 30 may be retracted from the first edge side of the main body part 221 in the first direction F1, such that the pressing claw 30 does not scrape the main body part 221 of the second electrode plate 22, thereby avoiding damage to the electrode plate and the like caused by the contact and scraping between the pressing claw 30 and the second electrode plate 22.

The protective member 25 may also cover a part of the main body part 221 of the second electrode plate 22, and the protective member 25 extends, in a plurality of directions, to edges of the main body part 221 of the second electrode plate 22 in the corresponding directions. For example, the main body part 221 is provided with a first edge and a second edge opposite to each other in a first direction F1, and a third edge and a fourth edge opposite to each other in a third direction F3. The protective member 25 covers the main body part 221, and in this case, the protective member 25 may extend to the first edge and the third edge and be spaced apart from the second edge and the fourth edge, or one protective member 25 may extend to the first edge and be spaced apart from the second edge, and the other protective member 25 may extend to the third edge and be spaced apart from the fourth edge. During the assembly of the electrode assembly 20 in this design, after the second electrode plate 22 covers the last layer of the plurality of electrode plates, a pressing claw 30 presses against the protective member 25 to compress the plurality of electrode plates. After the separator 24 covers the second electrode plate 22, the pressing claw 30 may be retracted from the first edge side or the third edge side of the main body part 221 in the first direction F1, such that the pressing claw 30 does not scrape the main body part 221 of the second electrode plate 22, thereby avoiding damage to the electrode plate and the like caused by the contact and scraping between the pressing claw 30 and the second electrode plate 22.

In the above embodiments, during the manufacturing of the electrode assembly 20, when the pressing claw 30 performs a compressing action, the pressing claw 30 may press against the protective member 25. By pressing the protective member 25, the plurality of electrode plates are compressed, and the pressing claw 30 is not in direct contact with the second electrode plate 22, while still pressing the protective member 25 to compress the plurality of electrode plates. Meanwhile, when the pressing claw 30 is retracted, the pressing claw 30 is retracted from one side of the main body part 221 in some embodiments, and a plurality of pressing claws 30 are retracted from a plurality of sides of the main body part 221 in some embodiments. Since the protective member 25 extends to the edge of the side, the probability that the pressing claw 30 is in contact with the second electrode plate 22 during retraction can be avoided, thereby avoiding, to a certain extent, damage to the electrode plate and the like caused by scraping, and further avoiding the ablation of the separator 24, fires, and the like.

According to the battery cell 100 of the embodiments of the present application, by providing the protective member 25 on the second electrode plate 22 of the electrode assembly 20, damage to the electrode plate and the like caused by the contact and scraping between the pressing claw 30 and the second electrode plate 22 are avoided, thereby avoiding the ablation of the separator 24, fires, and the like, and improving the yield rate of the electrode assembly 20. In addition, since the protective member 25 covers the second electrode plate 22 and extends to the edge, the protective member 25 can reinforce the second electrode plate 22, thereby improving the strength at the edge of the second electrode plate 22, further avoiding the impact, damage, and the like at the edge of the electrode plate during subsequent assembly process, and improving the yield rate of the battery cell 100 after assembly.

As shown in FIG. 7, in some embodiments, the main body part 221 of the second electrode plate 22 is rectangular and is provided with four corner parts, and the side of each of the corner parts distal to the first electrode plate 21 is provided with one protective member 25.

In some examples, in order to better compress the electrode plate, especially for electrode plates with a greater size, the pressing claws 30 may press against the four corners of the electrode plate. Therefore, as shown in FIG. 7, four protective members 25 are disposed on the main body part 221 of the second electrode plate 22, and the four protective members 25 are in one-to-one correspondence with the four corners of the second electrode plate 22. The protective members 25 may cover the corner parts, each corner part has two adjacent edges, and the protective member 25 may extend to the two edges of the corner part. It should be noted that the corner parts here are the four corners of the second electrode plate 22, and specific dimensions are not limited. That the protective member 25 covers the corresponding corner part here may be that the protective member covers a part of the corner part or completely covers the corner part. Preferably, the size of the protective member 25 is greater than the area of the pressing claw 30 covering the second electrode plate 22, such that the pressing claw 30 is not in contact with the second electrode plate 22.

Therefore, during the manufacturing of the electrode assembly 20, the pressing claws 30 are located at the four corners of the electrode plates, such that the compressing action on the plurality of electrode plates can be achieved. In this case, the pressing claws 30 are arranged in correspondence with the four corner parts of the second electrode plate 22, such that the pressing claws 30 can be spaced apart from the second electrode plate 22, thereby avoiding damage to the electrode plate caused by the contact and scraping between the pressing claw 30 and the second electrode plate 22, and avoiding the ablation of the separator 24, fires, and the like. In addition, the size of the protective member 25 can be reduced, thereby facilitating the manufacturing and forming of the protective member 25.

As shown in FIG. 7, in some embodiments, the main body part 221 of the second electrode plate 22 is rectangular, the main body part 221 has a length dimension of L1, the protective member 25 has a minimum dimension of L2 in the length direction F2 of the second electrode plate 22, and 0.1L1 ≤ L2 ≤ 0.5L1.

As shown in FIG. 7, the main body part 221 is rectangular. In this case, the length dimension of the main body part 221 is L1, and the minimum dimension of the protective member 25 in the length direction F2 is L2. An insufficient dimension of the protective member 25 in the direction may lead to a poor protective effect of the protective member 25, making it difficult to effectively space the pressing claw 30 apart from the second electrode plate 22, while an excessive dimension of the protective member 25 in the direction may readily cause overlap of the plurality of protective members 25 and the waste of the protective members 25. Therefore, L2 is limited to a range of 0.1L1 to 0.5L1, and L2 may be any value of, or a value in a range between any two of, 0.1L1, 0.2L1, 0.3L1, 0.4L1, and 0.5L1.

Therefore, the protective member 25 can not only effectively protect the main body part 221 of the second electrode plate 22, but also prevent the protective member 25 from an excessive size that may affect the arrangement of the protective member 25 on the second electrode plate 22.

As shown in FIG. 7, in some embodiments, the main body part 221 of the second electrode plate 22 is rectangular, the main body part 221 has a width dimension of B1, the protective member 25 has a minimum dimension of B2 in the width direction F3 of the second electrode plate 22, and 0.1B1 ≤ B2 ≤ 0.5B1.

As shown in FIG. 7, the main body part 221 is rectangular. In this case, the width dimension of the main body part 221 is B1, and the minimum dimension of the protective member 25 in the width direction F3 is B2. An insufficient dimension of the protective member 25 in the direction may lead to a poor protective effect of the protective member 25, making it difficult to effectively space the pressing claw 30 apart from the second electrode plate 22, while an excessive dimension of the protective member 25 in the direction may readily cause overlap of the plurality of protective members 25 and the waste of the protective members 25. Therefore, B2 is limited to a range of 0.1B1 to 0.5B1, and B2 may be any value of, or a value in a range between any two of, 0.1B1, 0.2B1, 0.3B1, 0.4B1, and 0.5B1.

Therefore, the protective member 25 can not only effectively protect the main body part 221 of the second electrode plate 22, but also prevent the protective member 25 from an excessive size that may affect the arrangement of the protective member 25 on the second electrode plate 22.

Correspondingly, the second electrode plate 22 may also be square. In this case, the length direction F2 of the second electrode plate 22 may also be the width direction F3.

As shown in FIGs. 5 and 6, in some embodiments, the main body part 221 of the second electrode plate 22 has a thickness of H1, the protective member 25 has a maximum thickness of H2, and 0.5H1 ≤ H2 ≤ 2H1.

The thickness H1 of the main body part 221 of the second electrode plate 22 here is the dimension in the stacking direction F1.

If the thickness of the protective member 25 is insufficient, the protective member 25 may be too thin to manufacture and form, and may be too thin to effectively protect the second electrode plate 22. If the thickness of the protective member 25 is excessive, the thick protective member 25 may excessively protrude from the second electrode plate 22, which affects the assembly of the electrode assembly 20 and may occupy additional space in the battery cell 100, resulting in a decrease in the energy density. Therefore, the thickness H2 of the protective member 25 may be limited to a range of 0.5H1 to 2H1, and H2 may be any value of, or a value in a range between any two of, 0.5H1, 0.6H1, 0.7H1, 0.8H1, 0.9H1, 1H1, 1.1H1, 1.2H1, 1.3H1, 1.4H1, 1.5H1, 1.6H1, 1.7H1, 1.8H1, 1.9H1, and 2H1.

Therefore, the protective member 25 can effectively protect the main body part 221 of the second electrode plate 22 without occupying excessive space, thereby avoiding, to a certain extent, the decrease in the energy density of the battery cell 100.

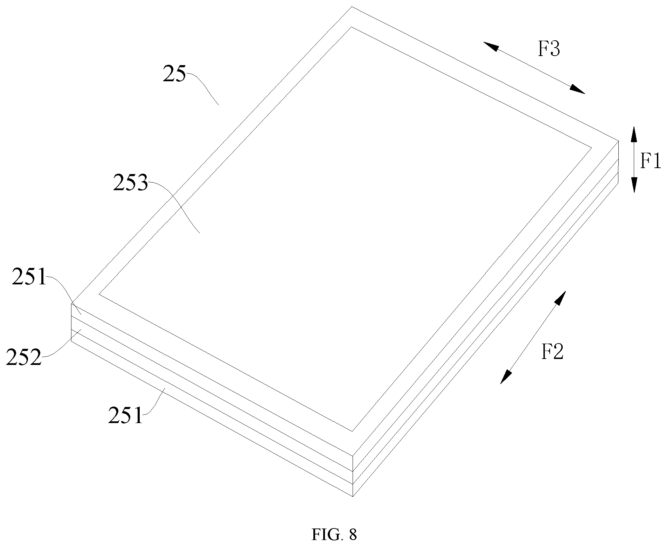

As shown in FIG. 8, in some embodiments, the protective member 25 includes at least one protective layer 251 and a heat absorbing layer 252 having heat absorbing capacity, the protective layer 251 and the heat absorbing layer 252 are arranged in the stacking direction F1 of the electrode assembly 20, and the side of the heat absorbing layer 252 distal to the second electrode plate 22 is provided with one protective layer 251.

It can be understood that the protective layer 251 can be used to protect the heat absorbing layer 252 and to separate the heat absorbing layer 252 from the pressing claw 30. When the pressing claw 30 is retracted, even if the pressing claw 30 scrapes the protective member 25 and generates a certain amount of heat, the protective layer 251 can transfer the heat to the heat absorbing layer 252, and the heat absorption by the heat absorbing layer 252 reduces the temperature at this position, further avoiding the probability of ablation of the separator 24 and improving the reliability and yield rate of the battery cell 100.

As shown in FIG. 8, in some embodiments, two protective layers 251 are present, and the heat absorbing layer 252 is arranged between the two protective layers 251.

The protective member 25 forms a three-layer sandwiched structure, such that the heat absorbing layer 252 is protected by the two protective layers 251, which can improve the stability of the overall structure, prevent, to a certain extent, the phase change or deformation of the heat absorbing layer 252 due to heat absorption from affecting the reliability of the protection of the protective member 25, and avoid other adverse effects caused by the direct contact between the heat absorbing layer 252 and the second electrode plate 22.

In some embodiments, the heat absorbing layer 252 is a paraffin layer. The use of the paraffin material, when the pressing claw 30 scrapes the protective member 25, allows the heat absorbing layer 252 to absorb the heat generated by scraping through a phase change, thereby reducing the probability of heat transfer to the second electrode plate 22, reducing the probability of ablation of the second electrode plate 22, and improving the reliability and yield rate of the electrode assembly 20.

In some embodiments, the protective layer 251 is a polyolefin layer. The use of the polyolefin material allows the protective layer 251 to effectively protect the heat absorbing layer 252. The polyolefin material has good chemical stability, insulating properties, and ease to process, manufacture, and form, which facilitates large-scale manufacturing and use of the protective member 25.

In some embodiments, the protective member 25 is coupled with the second electrode plate 22 by bonding, thereby achieving the fixed connection between the protective member 25 and the second electrode plate 22. The simple assembly process facilitates the assembly and formation and reduces the manufacturing difficulty and the manufacturing cost.

As shown in FIG. 8, in some embodiments, the side of the protective member 25 proximal to the second electrode plate 22 is provided with an adhesive layer 253.

During manufacturing, the adhesive layer 253 may be disposed on the protective member 25 in advance. When the protective member 25 is placed on the second electrode plate 22, the adhesive layer 253 is in contact with the second electrode plate 22, such that the protective member 25 can be adhered to the second electrode plate 22, thereby facilitating the connection.

Certainly, the protective member 25 may also be adhered to the second electrode plate 22 via an adhesive.

In some embodiments, the protective member 25 is made of a material including one of polypropylene, polyethylene, and polyethylene terephthalate.

The protective member 25 here may be a single-layer structural member, and the protective member 25 is a polypropylene layer, a polyethylene layer, or a polyethylene terephthalate layer. Certainly, the protective member 25 may also be a multi-layer material member, and in this case, one layer of the protective member 25 is a polypropylene layer, a polyethylene layer, or a polyethylene terephthalate layer.

The use of the above materials provides the protective member 25 with good chemical stability and insulating properties, ease to process, manufacture, and form, and cost-efficiency, which facilitates large-scale manufacturing and use of the protective member 25.

As shown in FIGs. 5 and 6, in some embodiments, the side of the protective member 25 distal to the second electrode plate 22 is provided with a smooth planar surface, such that the scraping with the protective member 25 when the pressing claw 30 is retracted can be reduced, which may reduce the probability of wear of the protective member 25, facilitate the retraction of the pressing claw 30, and reduce the obstruction to movement.

In some embodiments, the protective member 25 has a Shore hardness of 30 A to 90 A.

It can be understood that when the hardness of the protective member 25 is insufficient, the protective member 25 can hardly achieve an effective protective effect and is at risk of deformation and the like when the pressing claw 30 is retracted, such that the second electrode plate 22 may still be worn. When the hardness of the protective member 25 is excessive, after the electrode assembly 20 provided with the protective member 25 is inserted into the housing, the protective member 25 may collide with the housing 10 of the battery cell 100, thereby damaging the housing 10 or the electrode assembly 20. Therefore, the Shore hardness of the protective member 25 is limited to a range of 30A to 90A, and may be any value of, or a value in a range between any two of, 30A, 40A, 50A, 60A, 70A, 80A, and 90A.

Therefore, the protective member 25 can not only effectively protect the second electrode plate 22, but also improve the yield rate of the battery cell 100 after assembly.

The battery 1000 according to the embodiments of the second aspect of the present application includes the battery cell 100 according to the embodiments of the first aspect of the present application. The use of the above battery cell 100 can improve the manufacturing efficiency of the battery 1000 and reduce the probability of unqualified products.

The electric apparatus 2000 according to the embodiments of the third aspect of the present application includes the battery 1000 according to the embodiments of the second aspect of the present application, where the battery 1000 is configured to provide electric energy for the electric apparatus 2000. Thus, using the battery 1000 described above is beneficial for improving the use safety and reliability of the electric apparatus 2000.

Optionally, as shown in FIG. 1, when the battery 1000 is used in a vehicle, the battery 1000 may be disposed at the bottom, the head, or the tail of the vehicle. The battery 1000 may be configured to supply power to the vehicle. For example, the battery 1000 may serve as an operation power source for the vehicle. The vehicle may further include a controller and a motor. The controller is configured to control the battery 1000 to supply power to the motor, e.g., for operation power needed for starting, navigating, and driving of the vehicle.

A battery 1000 according to a specific embodiment of the present application and a vehicle having the same will be described below with reference to the drawings.

As shown in FIG. 1, the battery 1000 is disposed at the bottom of the vehicle. As shown in FIGs. 2 and 3, the battery 1000 includes a case 200 and battery cells 100. The battery cell 100 includes a housing 10 and an electrode assembly 20. The electrode assembly 20 here is of a stacked type.

As shown in FIGs. 5, 7, and 8, the electrode assembly 20 includes a plurality of electrode plates and a separator 24 arranged in a stacking manner. In the stacking direction, the plurality of electrode plates sequentially include a first electrode plate 21, a plurality of intermediate electrode plates 23, and a second electrode plate 22. The plurality of intermediate electrode plates 23 are located between the first electrode plate 21 and the second electrode plate 22. The second electrode plate 22 includes a main body part 221 and a tab 222. The main body part 221 is rectangular and is provided with four corner parts, and the side of each of the corner parts distal to the intermediate electrode plates 23 is provided with one protective member 25.

In the length direction F2 of the main body part 221, each protective member 25 has a minimum dimension of L2, the main body part 221 has a length dimension of L1, and 0.1L1 ≤ L2 ≤ 0.5L1.

In the width direction F3 of the main body part 221, each protective member 25 has a minimum dimension of B2, the main body part 221 has a width dimension of B1, and 0.1B1 ≤ B2 ≤ 0.5B1.

In the stacking direction F1, the main body part 221 has a thickness of H1, the protective member 25 has a maximum thickness of H2, and 0.5H1 ≤ H2 ≤ 2H1.

The protective member 25 includes two protective layers 251 and a heat absorbing layer 252. The heat absorbing layer 252 is disposed between the two protective layers 251. The heat absorbing layer 252 is a paraffin layer, and the protective layers 251 are polyolefin layers.

The protective member 25 is further provided with an adhesive layer 253. The size of the adhesive layer 253 may be slightly smaller than those of other layers, or may be the same as those of other layers. The protective member 25 is coupled with the second electrode plate 22 by bonding via the adhesive layer 253.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery cell (100), comprising an electrode assembly, wherein the electrode assembly comprises a plurality of electrode plates and a separator arranged in a stacking manner, wherein in the stacking direction, the plurality of electrode plates at least comprise a first electrode plate and a second electrode plate located at opposite ends in the stacking direction, wherein:
the second electrode plate comprises a main body part and a tab; and
a side of the second electrode plate distal to the first electrode plate is provided with a protective member, and the protective member covers at least a part of the main body part of the second electrode plate and extends to at least one edge of the main body part.

2. The battery cell according to claim 1, wherein the main body part of the second electrode plate is rectangular and is provided with four corner parts, and a side of each of the corner parts distal to the first electrode plate is provided with one protective member.

3. The battery cell according to claim 2, wherein the main body part of the second electrode plate is rectangular and has a length dimension of L1, the protective member has a minimum dimension of L2 in the length direction of the second electrode plate, and 0.1L1 ≤ L2 ≤ 0.5L1.

4. The battery cell according to claim 2, wherein the main body part of the second electrode plate is rectangular and has a width dimension of B1, the protective member has a minimum dimension of B2 in the width direction of the second electrode plate, and 0.1B1 ≤ B2 ≤ 0.5B1.

5. The battery cell according to claim 1, wherein the main body part of the second electrode plate has a thickness of H1, the protective member has a maximum thickness of H2, and 0.5H1 ≤ H2 ≤ 2H1.

6. The battery cell according to claim 1, wherein the protective member comprises at least one protective layer and a heat absorbing layer having heat absorbing capacity, the protective layer and the heat absorbing layer are arranged in the stacking direction of the electrode assembly, and a side of the heat absorbing layer distal to the second electrode plate is provided with one protective layer.

7. The battery cell according to claim 6, wherein the protective member comprises two protective layers, and the heat absorbing layer is arranged between the two protective layers.

8. The battery cell according to claim 6, wherein the heat absorbing layer is a paraffin layer, and/or the protective layer is a polyolefin layer.

9. The battery cell according to claim 1, wherein the protective member is coupled with the second electrode plate by bonding.

10. The battery cell according to claim 9, wherein a side of the protective member proximal to the second electrode plate is provided with an adhesive layer.

11. The battery cell according to claim 1, wherein the protective member is made of a material comprising one of polypropylene, polyethylene, and polyethylene terephthalate.

12. The battery cell according to claim 1, wherein a side of the protective member distal to the second electrode plate is a smooth planar surface.

13. The battery cell according to any one of claims 1 to 12, wherein the protective member has a Shore hardness of 30 A to 90 A.

14. A battery, comprising the battery cell according to any one of claims 1 to 13.

15. An electric apparatus, comprising the battery according to claim 14, wherein the battery is configured to provide electrical energy.
